(19) Europäisches Patentamt
European Patent Office
Office européen des brevets

(11) **EP 4 205 883 A1**

(12) **EUROPEAN PATENT APPLICATION**
published in accordance with Art. 153(4) EPC

(43) Date of publication:
05.07.2023 Bulletin 2023/27

(21) Application number: 22836030.1

(22) Date of filing: 16.05.2022

(51) International Patent Classification (IPC):
*B22F 1/145* (2022.01)        *C23C 22/02* (2006.01)
*C23C 22/06* (2006.01)

(52) Cooperative Patent Classification (CPC):
Y02P 10/25

(86) International application number:
PCT/CN2022/093106

(87) International publication number:
WO 2023/082580 (19.05.2023 Gazette 2023/20)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.11.2021 CN 202111329401

(71) Applicant: Hengdian Group DMEGC Magnetics
Co., Ltd.
Jinhua, Zhejiang 322118 (CN)

(72) Inventors:
• SUN, Yongyang
Dongyang, Zhejiang 322118 (CN)
• LI, Yuping
Dongyang, Zhejiang 322118 (CN)
• JIANG, Yuntao
Dongyang, Zhejiang 322118 (CN)
• ZHANG, Yunyi
Dongyang, Zhejiang 322118 (CN)
• GUO, Changzheng
Dongyang, Zhejiang 322118 (CN)

(74) Representative: V.O.
P.O. Box 87930
2508 DH Den Haag (NL)

(54) **SURFACE TREATMENT METHOD FOR METAL POWDER, AND SURFACE-PASSIVATED METAL POWDER**

(57)    Provided is a surface treatment method of metal powder and surface passivated metal powder. Herein, the surface treatment method uses passivation solution to treat the metal powder, to form a passivation film on the surface of the metal powder; the passivation solution passes through the metal powder by a flowing method; and the average particle size of the metal powder is 0.1~100 $\mu$m. A problem in the prior art that the metal powder is easily oxidized is solved, and it is suitable for the field of metal anti-oxidation.

EP 4 205 883 A1

## Description

### Cross-Reference to Related Application

The present application is based on and claims priority to Chinese application with a CN application number of 202111329401.8 and an application date of November 10, 2021, the disclosure of which is hereby incorporated by reference again in its entirety.

### Technical Field

The present invention relates to the field of metal anti-oxidation, in particular to a surface treatment method of metal powder and surface passivated metal powder.

### Background

Metal materials are used in all aspects of life, and a magnetic material is a very important branch of the metal materials, and is widely used in motors, transformers, photovoltaic inverters, and new energy vehicles. In the process of preparing the magnetic material, alloy powder is basically prepared firstly, and then the powder is made into a magnet, and the magnet is processed into various required shapes and specifications, or the powder is directly processed into the required shapes and specifications in one step. In the process of making the magnet from the powder and the use of the magnet, a problem of oxidation may be faced inevitably, and the oxidation of the powder or the magnet may seriously affect the performance of the magnet, thereby the performance of the magnet is reduced, and even failed.

A sintered neodymium-iron-boron (NdFeB) magnet generally forms a passivation film by immersing the surface of the magnet in passivation solution, and then the anti-oxidation ability of the magnet is improved by an electroplating layer. Neodymium-iron-boron magnetic powder used for bonding and injection-molding generally has an average particle size of about 100 $\mu$m. The magnetic powder and the passivation solution are weighed in proportion, mixed, stirred uniformly, and filtered after it is reacted for a period of time, and the magnetic powder with the passivation film is obtained after being dried.

With the development of miniaturization and precision of devices, sintered and bonded magnets may no longer meet the needs of people, and there are more and more applications of injection-molding neodymium-iron-boron, injection-molding ferrite, and injection-molding samarium-iron-nitrogen. The requirements for the magnet performance are also higher and higher. In general, the magnetic powder is finer, the performance of the made magnet is higher. However, the magnetic powder is finer, it is easier to be oxidized, and the requirements for anti-oxidation are also higher, and even increased exponentially.

Sintered neodymium-iron-boron is generally a block-like magnet, and is very dense. In the passivation process, it is directly immersed in passivation solution, and the magnet is taken out after a period of time, to form a passivation film required. The magnetic powder used for bonding neodymium-iron-boron and injection-molding neodymium-iron-boron is generally about 100 $\mu$m, which is a very thick particle size for the magnetic powder. During passivation, the passivation film is only formed on the surface of the magnetic powder, and the interior is hardly affected. The average particle size of the magnetic powder such as FeSi, FeSiAl, FeNi, and FeNiMo for a magnetic powder core is also 20 $\mu$m or more.

However, due to the limitation of its performance and preparation method, the particle size of the samarium-iron-nitrogen magnetic powder for injection-molding is 0.1~10 $\mu$m, which brings a great challenge to the anti-oxidation. While an immersion method used by a traditional method is used for passivation of a very small amount of the magnetic powder, the magnetic powder may be taken out after rapid immersion, and the degree of the passivation may be controlled.

However, while mass-produced, the magnetic powder passivation is so serious that the magnetic powder is corroded due to a rapid reaction, the long reaction time, and the difficulty of solid-liquid separation within a short time after the reaction, and the performance is reduced very much. If the passivation solution is too concentrated, the magnetic powder may be corroded. And after decreasing the concentration of the passivation solution the corrosion may be reduced, but the passivation effect may also be lost. Therefore, for fine powder in 0.1~10 $\mu$m level, the soaking method is not suitable, and it is difficult to achieve the mass production.

### Summary

A main purpose of the present invention is to provide a surface treatment method of metal powder and surface passivated metal powder, as to solve a problem in an existing technology that the metal powder is easily oxidized, especially the metal powder with a particle size less than 10 microns.

In order to achieve the above purpose, according to a first aspect of the present invention, a surface treatment method of metal powder is provided, and the surface treatment method uses passivation solution to treat the metal powder, to form a passivation film on the surface of the metal powder; the passivation solution passes through the metal powder by a flowing method; and the average particle size of the metal powder is 0.1~100 $\mu$m.

Further, the surface treatment method includes: 1) adding the metal powder to a container; 2) adding the passivation solution to the container, and controlling the passivation solution to flow through the metal powder and then flowing out of the container; 3) drying the metal powder treated by the passivation solution in the container; preferably, between 2) and 3), the surface treatment method includes adding washing solution to the container, washing the residual passivation solution on the metal powder, and then flowing out of the container; preferably, the washing solution includes ethanol and/or acetone; preferably, the single treatment amount of the surface treatment method is 10-200 kg; preferably, the passivation solution is added to the container by a water pump or an air pump; preferably, the drying method includes vacuum drying; preferably, the temperature of vacuum drying is 1~100°C; more preferably, the temperature of vacuum drying is 50~70°C; and preferably, the vacuum degree of vacuum drying is 0.0001~0.03 MPa.

Further, the container is a container with a filter screen or filter cloth, and the passivation solution flows out of the container through the filter screen or the filter cloth; preferably, after the passivation solution or the washing solution is added to the container, it further includes feeding a gas into the container; preferably, the gas is a nitrogen gas or an inert gas; more preferably, the inert gas is an argon gas; preferably, the pressure of the gas fed into the container is 0.1~1 MPa; preferably, the feeding time of the gas is 0.1~120 min; and more preferably, the feeding time of the gas is 1~10 min.

Further, the flow rate of the passivation solution is 1-1000 L/min; preferably, the flow rate of the passivation solution is 100-600 L/min; preferably, the treatment time of the passivation solution is 1~3600 s; more preferably, the treatment time of the passivation solution is 10~1800 s.

Further, the metal powder includes one or more of Fe, FeSi, FeSiAl, FeNi, FeNiMo, LaFeSi, NdFeB, NdFeN, CeFeB, CeFeN or SmFeN; preferably, the average particle size of the metal powder is 1~10 $\mu$m, and further preferably 2-8 $\mu$m; preferably, the metal powder is in a dry, wet or slurry state; preferably, the thickness of the passivation film is 3~30 nm; more preferably, while the average particle size of the metal powder is greater than or equal to 0.1 $\mu$m and less than 10 $\mu$m, the thickness of the passivation film is 3-6 nm; or while the average particle size of the metal powder is greater than or equal to 10 $\mu$m and less than 60 $\mu$m, the thickness of the passivation film is 6~15 nm; or while the average particle size of the metal powder is greater than or equal to 60 $\mu$m and less than 100 $\mu$m, the thickness of the passivation film is 15-30 nm.

Further, the passivation solution includes a solute, an inorganic solvent, an organic solvent and an additive; preferably, pH of the passivation solution is 3~6; preferably, the solute includes one or more of $Zn^{2+}$, $Zr^{2+}$, $Na^+$, $K^+$, $Ca^{2+}$, $NH^{4+}$, $Cl^-$, $PO_4^{3-}$, $NO_3^-$, $SO_4^{2-}$ or $CH_3COOH$; preferably, the concentration of each solute in the passivation solution is 0.001~10 mol/L; more preferably, the concentration of each solute is 0.01~1 mol /L. Preferably, the inorganic solvent includes water; preferably, the organic solvent includes one or more of methanol, ethanol, propanol, isopropanol, ethylene glycol, acetone, gasoline, toluene or xylene; more preferably, the organic solvent includes one or more of ethanol, acetone, isopropanol or ethylene glycol; preferably, the mass ratio of the inorganic solvent and the organic solvent is 1:0.001~1:1000; more preferably, the mass ratio of the inorganic solvent and the organic solvent is 1:0.1~1:10; and more preferably, the additive includes one or more of silane coupling agent, ethyl silicate, epoxy resin, titanate or phosphate.

In order to achieve the above purpose, according to a second aspect of the present invention, surface passivated metal powder is provided, and the above surface treatment method is used to passivate the metal powder, to obtain the surface passivated metal powder, and the average particle size of the surface passivated metal powder is 0.1~100 $\mu$m.

Further, the surface passivated metal powder is heated in air at 300°C for 30 min, and the weight gain rate is 0.1%~6%; the metal powder includes one or more of Fe, FeSi, FeSiAl, FeNi, FeNiMo, LaFeSi, NdFeB, NdFeN, CeFeB, CeFeN or SmFeN; preferably, the average particle size of the surface passivated metal powder is 1~10 $\mu$m; preferably, the thickness of the passivation film is 3~30 nm; more preferably, while the average particle size of the metal powder is greater than or equal to 0.1 $\mu$m and less than 10 $\mu$m, the thickness of the passivation film is 3-6 nm; or while the average particle size of the metal powder is greater than or equal to 10 $\mu$m and less than 60 $\mu$m, the thickness of the passivation film is 6~15 nm; or while the average particle size of the metal powder is greater than or equal to 60 $\mu$m and less than 100 $\mu$m, the thickness of the passivation film is 15-30 nm.

In order to achieve the above purpose, according to a third aspect of the present invention, an anti-oxidation magnetic material is provided, and the above surface passivated metal powder is used, to prepare and obtain the anti-oxidation magnetic material.

Further, the remanence drop rate of the anti-oxidation magnetic material is less than 10% compared with a non-anti-oxidation magnetic material of the same specification prepared from the metal powder; and preferably, the coercive force drop rate of the anti-oxidation magnetic material is less than 10% compared with the non-anti-oxidation magnetic material of the same specification.

By applying the technical scheme of the present invention, the metal powder is passivated by the method of flowing the passivation solution through the metal powder, the passivation film is formed on the surface of the metal powder, the surface passivated metal powder is prepared, and the surface passivated metal powder and the anti-oxidation magnetic material with the strong anti-oxidation capacity are obtained.

**Detailed Description of the Embodiments**

It should be noted that embodiments in the present application and features of the embodiments may be combined with each other in the case without conflicting. The present invention is described in detail below with reference to the embodiments.

Term explanation:
Average particle size: in the present application, it refers to a surface area mean diameter (SMD), namely the diameter of a particle having a surface area equal to the average surface area of all the particles in the particle.

Isothermal magnetic entropy change: in the process of isothermal magnetization of a magnetic material, while a magnetic field is applied at a constant temperature, a magnetic moment is arranged from disorder to order, the magnetic entropy is decreased, the total entropy of a system is decreased, and heat is released to the outside world. In this process, the magnitude of the entropy change is called as the isothermal magnetic entropy change. Under the same magnetic field change, the isothermal magnetic entropy change ($\Delta$SM) may be used to represent the magnitude of the magnetocaloric effect.

As mentioned in the background, while the passivated magnetic powder of 0.1~10 $\mu$m level is mass-produced, it is easy to produce problems that the reaction time is long, and the solid-liquid separation is slow, so that the passivation is excessive and the performance of the magnetic powder is excessively reduced. The inventor of the present application deeply researches the surface treatment method of the metal powder, and provides a surface treatment method of metal powder and surface passivated metal powder prepared by this method. The present invention uses a method of flowing passivation solution through the metal powder, and by the method of flowing the passivation solution through the metal powder, the metal powder is passivated, a passivation film is formed on the surface of the metal powder, the surface passivated metal powder is prepared, and the surface passivated metal powder and anti-oxidation magnetic material with the strong anti-oxidation capacity are obtained. At the same time, the passivation solution flows through the metal powder, which is beneficial to control the passivation time, and prevent the metal powder, especially the metal powder with a smaller particle size or a large batch, from being excessively passivated in the passivation solution because the time is too long, affecting the performance of the metal powder.

Therefore, in the present application, the inventor tries to prepare the surface passivated metal powder by using the method of flowing the passivation solution through the metal powder. It is found from test verification that this method may prepare the surface passivated metal powder in large quantities. Therefore, a series of protection schemes of the present application are proposed.

In a first typical embodiment of the present application, a surface treatment method of metal powder is provided. The surface treatment method uses passivation solution to treat the metal powder, to form a passivation film on the surface of the metal powder; and the passivation solution passes through the metal powder by a flowing method.

The flowing method is used, so that the passivation solution may pass through the powder in a flowing mode, and a reaction between the powder and the passivation solution may be completed in the process of flowing through the powder, to form the passivation film. This mode of forming the passivation film is convenient for precisely controlling the surface treatment degree of the metal powder by further controlling the concentration, the flow rate and the time of treatment solution, thereby a problem that the metal powder, especially the metal powder with a small particle size or a large batch, is easy to be excessively passivated so as to affect the performance is solved.

In the present application, the passivation solution in the container also flows out during the process of addition, while in an existing technology, the treatment solution needs to fully infiltrate the metal powder. In the present application, the treatment solution is flowed, it is fully infiltrated in a middle process. And it is not completely infiltrated when the treatment solution is just added and after the treatment solution is stopped adding, thereby the total infiltration time is reduced, and the problem that the metal powder with the small particle size or the large batch is excessively passivated is prevented. Due to the short passivation time, the metal powder located on a surface layer of a metal powder pile has a little difference in passivation treatment time compared with the metal powder in a deep layer, so that the thickness of passivation layers of the surface passivated metal powder prepared in the same batch may be similar, and the anti-oxidation performance and the magnetic performance are similar.

In a preferred embodiment, the above surface treatment method includes: 1) adding the metal powder to a container; 2) adding the passivation solution to the container, and controlling the passivation solution to flow through the metal powder and then flowing out of the container; 3) drying the metal powder treated by the passivation solution in the container; preferably, between 2) and 3), the surface treatment method includes adding washing solution to the container, washing the residual passivation solution on the metal powder, and then flowing out of the container; preferably, the washing solution includes ethanol and/or or acetone; preferably, the single treatment amount of the surface treatment method is 10-200 kg; preferably, the passivation solution is added to the container by a water pump or an air pump; preferably, the drying method includes vacuum drying; preferably, the temperature of vacuum drying is 1~100°C; more preferably, the temperature of vacuum drying is 50~70°C; and preferably, the vacuum degree of vacuum drying is 0.0001~0.03 MPa.

In the above surface treatment method, the metal powder is added to the container, to facilitate the subsequent separation of the passivation solution and the metal powder. By controlling the flow rate and the passivation time of the passivation solution flowing through the metal powder, the degree of passivation of the metal powder is controlled; after the passivation, the metal powder is dried, to prevent the passivation solution from existing on the surface of the metal powder for a long time, and continuously performing a passivation reaction, thereby the occurrence of excessive passivation is prevented. After the passivation solution flows through the metal powder and before drying, a washing solution may be used to flow through the passivated metal powder, to remove the residual passivation solution on the surface of the passivated metal powder, and prevent the occurrence of excessive passivation.

Using the above surface treatment method, compared with the existing technology, especially for the passivation of the metal powder with a small particle size (0.1-10 $\mu$m), the single treatment of 10-200 kg of the metal powder may be achieved, and it is greatly improved relative to the existing technology that only the laboratory-level (under 100 g) production may be performed. The mass production may save manpower, time and reagents, and is beneficial to reduce the production cost. A single reaction is used to prepare a large number of products, and it is also convenient to control the uniformity and stability of the passivation degree of the products. Since the passivation reaction of the present application occurs in the container, the amount of a raw material required for the reaction is large, and the passivation solution has certain volatility and corrosiveness. Therefore, the water pump or the air pump may be used to add the passivation solution to the container.

For the metal powder treated with the passivation solution, in order to facilitate the removal of the residual passivation solution on the surface of the metal powder, and prevent the further passivation reaction from resulting in excessive passivation, it is recommended to use common methods such as the vacuum drying, to dry the surface passivated metal powder. Compared with heat drying, the drying temperature of vacuum drying is lower, and it is easier to protect the surface passivated metal powder, and prevent the metal powder from being oxidized in the drying process, and affecting the product quality and subsequent use. According to the particle size of the metal powder, the effect of solid-liquid separation, boiling point and composition of the passivation solution and the like, the temperature of vacuum drying may be adjusted appropriately, for example, it may be 1~100°C. It is preferably 20~80°C, and the most commonly used vacuum drying temperature is 50~70°C. Specifically, according to actual needs, the temperature of vacuum drying may be flexibly controlled to be 50, 55, 60, 65 or 70°C, as to adjust in allusion to the different anti-oxidation capacities of the different metal powder, and prevent the metal powder from being oxidized due to the excessive temperature. Further, on the premise of guaranteeing the drying effect, the passivated metal powder may be protected, to prevent the oxidation reaction due to the excessive temperature.

According to the different vacuum drying temperatures and passivation solution compositions, a suitable vacuum degree may be selected to dry the surface passivated metal powdersurface passivated metal powder, as to remove the passivation solution on the surface of the metal powder. The vacuum degree of vacuum drying is preferably 0.0001~0.03 MPa, and it may be appropriately adjusted outside the range, and while the desired drying effect is achieved, the vacuum degree is kept as large as possible, as to reduce the production energy consumption. Before the vacuum drying, it is further preferable to use a chemically stable gas such as a nitrogen gas or an inert gas, to replace the air in a vacuum drying device, and then vacuumize, so that the surface passivated metal powdersurface passivated metal powder may not be further oxidized under a condition of heating, and the product quality is reduced.

In a preferred embodiment, the container is a container with a filter screen or filter cloth, and the passivation solution flows out of the container through the filter screen or the filter cloth; preferably, after the passivation solution or the washing solution is added to the container, it further includes feeding a gas into the container; preferably, the gas is a nitrogen gas or an inert gas; more preferably, the inert gas is an argon gas; preferably, the pressure of the gas fed into the container is 0.1~1 MPa; preferably, the feeding time of the gas is 0.1~120 min; and more preferably, the feeding time of the gas is 1~10 min.

The filter screen, the filter cloth or other devices with a filtering function are arranged in the container. The above filtering device is used, the solid-liquid separation may be quickly achieved after the metal powder is passivated by the passivation solution, thereby the purpose of controlling the passivation time and preventing the excessive passivation is achieved. A specific using mode of the filtering device may be that, before the reaction starts, after the metal powder to be passivated is placed in the filtering device, the filtering device is installed in the container. It may also be that after the filtering device is installed in the container, the metal powder is directly added to the container.

In a preferred embodiment, the container is also provided with a feeding port, an air inlet and a liquid outlet. In order to accelerate the solid-liquid separation and guarantee the complete solid-liquid separation, after the passivation solution is added to the container by the feeding port, the gas is fed into the container by the air inlet, as to provide an appropriate gas pressure and promote the passivation solution to flow out from a solid-liquid separation device, and flow out of the container by the liquid outlet, and the passivation time is further controlled and reduced by using the appropriate gas pressure. The above feed gas may be the nitrogen gas or the inert gas. While the pressure is provided, the gas with relatively stable chemical properties is used instead of the air, to prevent oxygen in the air from oxidizing the metal powder and improve the quality of the product prepared. In the inert gases, the argon gas may be selected as the feed gas. The nitrogen gas and argon gas are used as protective gases, which are easy to obtain and low in cost, and may be used to reduce the production cost. According to the differences of the particle sizes of the metal powder, the fluidity of the passivation solution and the like, the pressure of the feed gas may be adjusted appropriately, and it may be 0.1~1 MPa. The gas feeding time may also be adjusted between 0.1 and 120 min, to obtain the surface passivated metal powder with the better solid-liquid separation effect, and reduce the burden of the subsequent vacuum drying step. Under the premise of maintaining the effect, in order to reduce the amount of the feed gas and reduce the production cost, the gas feeding time may be 1~10 min.

In a preferred embodiment, the flow rate of the passivation solution is 1-1000 L/min; preferably, the flow rate of the passivation solution is 100-600 L/min; preferably, the treatment time of the passivation solution is 1~3600 s; more preferably, the treatment time of the passivation solution is 10~1800 s.

The flow rate of the passivation solution is the flow rate of the passivation solution added to the container, and according to the different conditions such as metal powder properties, passivation amount, and properties of the passivation solution, the flow rate of the passivation solution may be 1~1000 L/min. According to factors such as the thickness of the passivation layer, the properties of the metal powder and the passivation solution, the treatment time of the passivation solution is flexibly adjusted, and is 1~3600 s. If the treatment time is less than 1 s, the surface of the metal powder is not sufficiently treated, to form a sufficient passivation film, so the anti-oxidation performance is not improved; and if the treatment time is greater than 3600 s, the passivation film is too thick, so that the performance of the metal powder is reduced. More preferably, the above container and feed gas may be used to control the treatment time of the passivation solution between 10 and 1800 s, to guarantee that the thickness of the passivation layer of the metal powder reaches the needed requirements, and the excessive passivation does not occur to guarantee the quality of the product. For the metal powder with a smaller average particle size, the accurate control of the passivation treatment time is a key parameter for preparing the surface passivated metal powder. The above surface treatment method is used to further control the treatment time of the passivation solution within 10 s~600 s, or even 100 s~300 s, and it is convenient for mass passivation of the metal powder with the smaller average particle size at the same time, to avoid the excessive passivation.

In a preferred embodiment, the metal powder includes but is not limited to one or more of Fe, FeSi, FeSiAl, FeNi, FeNiMo, LaFeSi, NdFeB, NdFeN, CeFeB, CeFeN or SmFeN; preferably, the average particle size of the metal powder is 0.1~100 $\mu$m; more preferably, the average particle size of the metal powder is 1~10 $\mu$m, and further preferably 2-8 $\mu$m. The average particle size of the metal powder is specifically 0.1 $\mu$m, 0.2 $\mu$m, 0.3 $\mu$m, 0.5 $\mu$m, 0.8 $\mu$m, 1 $\mu$m, 2 $\mu$m, 3 $\mu$m, 4 $\mu$m, 5 $\mu$m, 6 $\mu$m, 7 $\mu$m , 8 $\mu$m, 9 $\mu$m, 10 $\mu$m, 15 $\mu$m, 20 $\mu$m, 25 $\mu$m, 30 $\mu$m, 40 $\mu$m, 50 $\mu$m, 60 $\mu$m, 70 $\mu$m, 80 $\mu$m, 90 $\mu$m, and 100 $\mu$m. Preferably, the metal powder is in a dry, wet or slurry state; preferably, the thickness of the passivation film is 3~30 nm; more preferably, while the average particle size of the metal powder is greater than or equal to 0.1 $\mu$m and less than 10 $\mu$m, the thickness of the passivation film is 3-6 nm; or while the average particle size of the metal powder is greater than or equal to 10 $\mu$m and less than 60 $\mu$m, the thickness of the passivation film is 6~15 nm; or while the average particle size of the metal powder is greater than or equal to 60 $\mu$m and less than 100 $\mu$m, the thickness of the passivation film is 15-30 nm.

The metal powder may be a single material, or may be a plurality of materials of mixtures of the different types of the metal powder. By flexibly adjusting the passivation time, the composition of the passivation solution and other factors, a plurality of types of the metal powder may be passivated simultaneously in one time of the passivation reaction, and may be put into subsequent use after one time of the passivation reaction. It overcomes a problem that the different types of the metal powder needs to be passivated separately and needs to be mixed after the passivation, the production process and required time are reduced, and the production cost is reduced. The average particle size of the metal powder is 0.1~100 $\mu$m. If the average particle size of the metal powder is too small, and less than 0.1 $\mu$m, it may be excessively passivated while it is in contact with the passivation solution, so that it loses the original activity. If the average particle size of the metal powder is too large, and greater than 100 $\mu$m, it is not beneficial to the subsequent use. In order to facilitate the subsequent use, the advantage of this surface treatment method may be used to accurately and flexibly control the passivation time, especially while the average particle size of the metal powder is 1~10 $\mu$m, this surface treatment method may achieve the good effect.

Before the passivation, the metal powder added to the container may be in different states, such as dry, wet or slurry state, it is convenient for selecting an appropriate mode to add to the container to complete the passivation reaction, and may also reduce a pretreatment step for the metal powder. In order to guarantee the passivation effect and improve the anti-oxidation capacity of the metal powder, the thickness of the passivation layer of the surface passivated metal powder may be 3~30 nm. If the passivation layer is too thin, it is easy to cause insufficient anti-oxidation capacity of the product; and if the passivation layer is too thick, it is easy to cause the performance of the metal powder itself to reduce too much, and it is difficult to meet the requirements for use.

According to the different average particle sizes of the metal powder, the thickness of the passivation film should be adjusted appropriately. For the metal powder with the smaller average particle size, the thinner thickness of the passivation film can make the anti-oxidation capacity of the product meet the requirements. For the metal powder with the larger average particle size, the thickness of the passivation film needs to be thicker so that the anti-oxidation capacity of the product may reach the requirements. The thickness of the passivation film may be flexibly adjusted according to the type of the metal powder and the requirements of anti-oxidation capacity.

A test method for the thickness of the passivation film may be as follows: obtained magnet powder is subjected to argon sputtering (Ar sputtering), and the phosphorus element (P) content is tested by an X-ray photoelectron spectroscope (XPS), a position in which it is reduced from a phosphorus (P) cross section of the passivation film to 50% of the maximum intensity is used as an interface position between the passivation film and a substrate, and the sputtering time t from the surface to the interface position is read, and multiplied by the sputtering speed 5 nm/min of $SiO_2$ as a standard sample as a $SiO_2$ conversion film thickness. Alternatively, the composition and morphology of a powder side may be detected by a scanning electron microscope, to estimate the thickness of the passivation film.

In a preferred embodiment, the passivation solution includes a solute, an inorganic solvent, an organic solvent and an additive; preferably, pH of the passivation solution is 3~6; preferably, the solute includes but is not limited to one or more of $Zn^{2+}$, $Zr^{2+}$, $Na^+$, $K^+$, $Ca^{2+}$, $NH_4^+$, $Cl^-$, $PO_4^{3-}$, $NO_3^-$, $SO_4^{2-}$ or $CH_3COOH$; preferably, the concentration of each solute in the passivation solution is 0.001~10 mol/L; more preferably, the concentration of each solute is 0.01~1 mol /L. Preferably, the inorganic solvent includes water; preferably, the organic solvent includes but is not limited to one or more of methanol, ethanol, propanol, isopropanol, ethylene glycol, acetone, gasoline, toluene or xylene; more preferably, the organic solvent includes one or more of ethanol, acetone, isopropanol or ethylene glycol; preferably, the mass ratio of the inorganic solvent and the organic solvent is 1:0.001~1:1000; more preferably, the mass ratio of the inorganic solvent and the organic solvent is 1:0.1~1:10; and more preferably, the additive includes but is not limited to one or more of silane coupling agent, ethyl silicate, epoxy resin, titanate or phosphate.

In the passivation solution, the solute, the inorganic solvent, the organic solvent and the additive are included. The solute includes but is not limited to one or more of $Zn^{2+}$, $Zr^{2+}$, $Na^+$, $K^+$, $Ca^{2+}$, $NH_4^+$, $Cl^-$, $PO_4^{3-}$, $NO_3^-$, $SO_4^{2-}$ or $CH_3COOH$, and the concentration of each solute may be 0.001~10 mol/L. If the concentration of the solute is less than 0.001 mol/L, the surface of the metal powder is difficult to be fully passivated, a sufficient passivation film may not be formed, and the anti-oxidation performance is not improved; and if the addition amount is greater than 10 mol/L, it is easy to cause a problem that the passivation film is too thick, so that the performance of the metal powder is reduced. In order to facilitate the control of the passivation reaction and make the passivation time in an appropriate range, it is not so short that controlling the passivation reaction is difficult, and it is not so long that the reaction time is wasted and the production efficiency is reduced, the concentration of each solute is preferably 0.01~1 mol/L.

The inorganic solvent of the passivation solution is generally water, and the organic solvent may be a single solvent, to reduce the difficulty of preparing the passivation solution; and it may also be a mixture of a plurality of the organic solvents, and it is convenient to adjust the performance of the passivation solution, as to have the better passivation ability. Preferably, the organic solvent may be one or more of common ethanol, acetone, isopropanol or ethylene glycol. Because the acetone, isopropanol and ethylene glycol are easily dissolved in water, the ethanol may be miscible with the water in any proportions, and the above organic solvent is low in boiling point, and easily removed in a subsequent drying step. It is easy to use and low in cost as a common solvent. In order to facilitate the passivation solution with the different compositions to exert suitable passivation ability for the different metal powder, the mass ratio of the inorganic solvent and the organic solvent is 1:0.001~1:1000; more preferably, the mass ratio of the inorganic solvent and the organic solvent is 1:0.1~1:10. By using one or more of the silane coupling agent, ethyl silicate, epoxy resin, titanate or phosphate as the additive, the passivation film may be denser and the coating effect is better. The additive may also make the surface passivated metal powder better combine with other substances such as a binder in the subsequent use process. The additive may be added during the preparation of the passivation solution, or may be added during the subsequent processes.

In a second typical embodiment of the present application, surface passivated metal powder is provided, and the above surface treatment method is used to passivate the metal powder, to obtain the surface passivated metal powder, and the average particle size of the above surface passivated metal powder may be 0.1~100 $\mu$m.

The passivated metal layer is generally a salt formed by a chemical reaction between a metal and the passivation solution, such as $FePO_4$ formed by Fe and $PO_4^{3-}$, $FeSO_4$ formed by Fe and $SO_4^{2-}$, and a corresponding rare earth metal salt formed by rare earth and an acid radical ion. The generated metal salt is adhered to the surface of the metal powder, has the relatively stable chemical properties, and may prevent the metal powder from being oxidized.

In a preferred embodiment, the surface passivated metal powder is heated in air at 300°C for 30 min, and the weight gain rate is 0.1%~6%; the metal powder includes but is not limited to one or more of Fe, FeSi, FeSiAl, FeNi, FeNiMo, LaFeSi, NdFeB, NdFeN, CeFeB, CeFeN or SmFeN; preferably, the average particle size of the surface passivated metal powder is 1~10 $\mu$m. The average particle size of the metal powder may specifically be 0.1 $\mu$m, 0.2 $\mu$m,

0.3 $\mu$m, 0.5 $\mu$m, 0.8 $\mu$m, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 15 $\mu$m, 20 $\mu$m, 25 $\mu$m, 30 $\mu$m, 40 $\mu$m, 50 $\mu$m, 60 $\mu$m, 70 $\mu$m, 80 $\mu$m, 90 $\mu$m, and 100 $\mu$m. Preferably, the thickness of the passivation film is 3~30 nm; more preferably, while the average particle size of the metal powder is greater than or equal to 0.1 $\mu$m and less than 10 $\mu$m, the thickness of the passivation film may be 3~6 nm; or while the average particle size of the metal powder is greater than or equal to 10 $\mu$m and less than 60 $\mu$m, the thickness of the passivation film may be 6~15 nm; or while the average particle size of the metal powder is greater than or equal to 60 $\mu$m and less than 100 $\mu$m, the thickness of the passivation film may be 15-30 nm.

The above surface passivated metal powder is heated in the air at 300°C for 30 min to test its anti-oxidation capacity. If the weight gain rate is less than 0.1%~6%, it means that the anti-oxidation capacity of the passivated metal powder reaches the requirements. The average particle size of the surface passivated metal powder is 0.1~100 $\mu$m. In order to facilitate the subsequent use, the surface passivated metal powder is preferably 1~10 $\mu$m. The thickness of the passivation film should be 3~30 nm. If the passivation layer is too thin, it is easy to cause insufficient anti-oxidation capacity of the product; and if the passivation layer is too thick, it is easy to cause that the performance of the metal powder itself is reduced too much, and it is difficult to reach the requirements for use.

While the average particle size is greater than 100 $\mu$m, due to the larger particle size, the required passivation layer and passivation time are longer, this method or existing technology is used for passivation treatment, and there is a little difference. For the metal powder with an average particle size of less than 0.1 $\mu$m, the oxidation is very serious after being prepared by the existing technology, and there is no meaning for passivation, or the average particle size of some metal powder may not reach 0.1 $\mu$m or less.

In a third typical embodiment of the present application, an anti-oxidation magnetic material is provided, and the above surface passivated metal powder is used, to prepare and obtain the anti-oxidation magnetic material.

The magnetic material prepared directly from unpassivated metal powder may inevitably face a problem of oxidation in the process of making the powder into a magnet and the process of using the magnet, and the oxidation of the powder or the magnet may seriously affect the performance of the magnet, thereby the performance of the magnet is reduced, or even failed. The anti-oxidation magnetic material prepared by using the above surface passivated metal powder may overcome the problem that the magnet performance is reduced due to the oxidation.

In a preferred embodiment, the remanence drop rate of the anti-oxidation magnetic material is less than 10% compared with a non-anti-oxidation magnetic material of the same specification prepared from the metal powder; and preferably, the coercive force drop rate of the anti-oxidation magnetic material is less than 10% compared with the non-anti-oxidation magnetic material of the same specification.

The coercive force is greatly affected by the particle size of the powder. Generally, for the same material, the particle size of the powder is finer, and the coercive force is greater. However, after the fineness reaches a certain degree, the coercive force of ultrafine power is reduced due to serious oxidation.

The beneficial effects of the present application are further explained in detail below with reference to specific embodiments. It should be noted that in the following embodiments and contrast examples, a detection device for magnetic performance is a NIM-2000 permanent magnet material magnetic property detection system, and a measurement method is a general standard method. A detection device for magnetic permeability is commonly used E4991A or WK600B. After an inductance value is measured, the magnetic permeability is calculated according to the size. A detection device for an isothermal magnetic entropy change is a vibrating sample magnetometer (VSM) or a physical property measurement system (PPMS), which measures a magnetization curve M-H at different temperatures, and then calculates it according to the following Maxwell relational expression.

$$\Delta S_M = S_M(T, H_2) - S_M(T, H_1) = \int_{H_1}^{H_2} \left(\frac{\partial M(H,T)}{\partial T}\right)_H dH$$

Embodiment 1:

1. The passivation solution is prepared, the inorganic solvent is water, the organic solvent is ethanol, and the mass ratio of the inorganic solvent and organic solvent is 1:4. The solute includes 0.15 mol/L of $Zn^{2+}$, 0.2 mol/L of $Zr^{2+}$, 0.1 mol/L of $K^+$, 0.2 mol/L of $Cl^-$, and 0.2 mol/L of $PO_4^{3-}$, and pH is adjusted to 3 with a phosphoric acid. The additive is titanate, and the addition amount of the titanate is 0.5% of the total mass of powder (namely the mass of the metal powder to be passivated).

2. 100 kg of neodymium-iron-boron powder with an average particle size of 60 $\mu$m is taken, and added to a container that may achieve solid-liquid separation by a filter screen and filter cloth by a funnel through a feeding port.

3. The passivation solution is pumped into the container with the powder through a pipe from the feeding port by an air pump, the flow rate is 200 L/min, and it is treated for 30 min, and then the passivation solution is stopped to be injected into the feeding port.

4. The feeding port is closed, 0.12 MPa of a nitrogen gas is fed from an air inlet, the gas feeding time is 20 min, and most of the passivation solution in the container is filtered out.

5. The treated powder is taken out, and vacuum-dried at 90°C and 0.005 MPa for 5 h, to obtain the dried neodymium-iron-boron powder with a passivation layer on the surface.

6. The neodymium-iron-boron powder with the passivation layer on the surface is treated at a high temperature of 300°C for 30 min, an oxidation weight gain test is performed, and the measured oxidation weight gain rate is 2.1%, while a control group without surface treatment is 3.5%.

7. 15 g of the powder with the passivation film on the surface obtained in the step 5 and the untreated powder are taken, and 3wt% of an epoxy resin is added as a binder respectively, after a standard cylindrical sample is prepared, the magnetic properties are tested, and test results are listed in Table 2.

Embodiment 2:

Compared with Embodiment 1, the treatment time of the third step is adjusted to 10 min, and the others are the same as those of Embodiment 1. The neodymium-iron-boron powder with the passivation layer on the surface is treated at a high temperature of 300°C for 30 min, an oxidation weight gain test is performed, and the measured oxidation weight gain rate is 2.7%, while a control group without surface treatment is 3.5%.
15 g of the powder with the passivation film on the surface obtained in the step 5 and the untreated powder are taken and 3wt% of an epoxy resin is added as a binder respectively, after a standard cylindrical sample is prepared, the magnetic properties are tested, and test results are listed in Table 2.

Embodiment 3:

1. The passivation solution is prepared. The solute includes 0.10 mol/L of $Zn^{2+}$, 0.1 mol/L of $Zr^{2+}$, 0.2 mol/L of $PO_4^{3-}$, 0.1 mol/L of $K^+$, and 0.1 mol/L of $Cl^-$, the inorganic solvent is water which is 70% of the total mass of the solvent, the organic solvent is anhydrous ethanol which is 30% of the total mass of the solvent, $CH_3COOH$ is added to adjust a pH value to 4, and a silane coupling agent which is 0.2% of the total mass of the powder is added.

2. 10 kg of samarium-iron-nitrogen powder with an average particle size of 10 μm is taken, and added to a container that may achieve solid-liquid separation by a filter screen and filter cloth.

3. The passivation solution is pumped into the container with the powder through a pipe from a feeding port by an air pump, the flow rate is 300 L/min, and it is treated for 8 min, and then the passivation solution is stopped to be injected into the feeding port.

4. The feeding port is closed, 0.12 MPa of a nitrogen gas is fed from an air inlet, the gas feeding time is 20 min, and most of the passivation solution in the container is filtered out.

5. The treated powder is taken out, and vacuum-dried at 70°C and 0.005 MPa for 5 h, to obtain the dried samarium-iron-nitrogen powder with a passivation layer on the surface.

6. The samarium-iron-nitrogen powder with the passivation layer on the surface is treated at a high temperature of 300°C for 30 min, an oxidation weight gain test is performed, and the measured oxidation weight gain rate is 3.6%, while a control group without surface treatment is 9.5%.

7. 15 g of the powder with the passivation film on the surface obtained in the step 5 and the untreated powder are taken and 3wt% of an epoxy resin is added as a binder, after a standard cylindrical sample is prepared, the magnetic properties are tested, and test results are listed in Table 2.

Embodiment 4:

This embodiment is the same as Embodiment 3 except that the treatment time in the third step is adjusted to 2 min. The samarium-iron-nitrogen powder with the passivation layer on the surface is treated at a high temperature of 300°C for 30 min, an oxidation weight gain test is performed, and the measured oxidation weight gain rate is 4.7%, while a control group without surface treatment is 9.5%.
15 g of the powder with the passivation film on the surface obtained in the step 5 and the untreated powder are taken and 3wt% of an epoxy resin is added as a binder respectively, after a standard cylindrical sample is prepared, the magnetic properties are tested, and test results are listed in Table 2.

Embodiment 5:

1. The passivation solution is prepared. The solute includes 0.10 mol/L of $Zn^{2+}$, 0.1 mol/L of $Zr^{2+}$, 0.2 mol/L of $PO_4^{3-}$, 0.1 mol/L of $K^+$, and 0.1 mol/L of $Cl^-$, the inorganic solvent is water which is 70% of the total mass of the solvent, the organic solvent is anhydrous ethanol which is 30% of the total mass of the solvent, $CH_3COOH$ is added to adjust a pH value to 4, and a silane coupling agent which is 0.2% of the total mass of the powder is added.

2. 10 kg of samarium-iron-nitrogen powder with an average particle size of 5 $\mu$m is taken, and added to a container that may achieve solid-liquid separation by a filter screen and filter cloth.

3. The passivation solution is pumped into the container with the powder through a pipe from a feeding port by an air pump, the flow rate is 300 L/min, and it is treated for 5 min, and then the passivation solution is stopped to be injected into the feeding port.

4. The feeding port is closed, 0.15 MPa of a nitrogen gas is fed from an air inlet, the gas feeding time is 10 min, and most of the passivation solution in the container is filtered out.

5. The treated powder is taken out, and vacuum-dried at 70°C and 0.005 MPa for 5 h, to obtain the dried samarium-iron-nitrogen powder with a passivation layer on the surface.

6. The samarium-iron-nitrogen powder with the passivation layer on the surface is treated at a high temperature of 300°C for 30 min, an oxidation weight gain test is performed, and the measured oxidation weight gain rate is 4.6%, while a control group without surface treatment is 12.9%.

7. 15 g of the powder with the passivation film on the surface obtained in the step 5 and the untreated powder are taken and 3wt% of an epoxy resin is added as a binder respectively, after a standard cylindrical sample is prepared, the magnetic properties are tested, and test results are listed in Table 2.

Embodiment 6:

1. The passivation solution is prepared. The solute includes 0.10 mol/L of $Zn^{2+}$, 0.1 mol/L of $Zr^{2+}$, 0.2 mol/L of $PO_4^{3-}$, 0.1 mol/L of $K^+$, and 0.1 mol/L of $Cl^-$, the inorganic solvent is water which is 70% of the total mass of the solvent, the organic solvent is anhydrous ethanol which is 30% of the total mass of the solvent, $CH_3COOH$ is added to adjust a pH value to 4, and a silane coupling agent which is 0.8% of the total mass of the powder is added.

2. 10 kg of samarium-iron-nitrogen powder with an average particle size of 1 $\mu$m is taken, and added to a container that may achieve solid-liquid separation by a filter screen and filter cloth.

3. The passivation solution is pumped into the container with the powder through a pipe from a feeding port by an air pump, the flow rate is 300 L/min, and it is treated for 2 min, and then the passivation solution is stopped to be injected into the feeding port.

4. The feeding port is closed, 0.3 MPa of a nitrogen gas is fed from an air inlet, the gas feeding time is 5 min, and most of the passivation solution in the container is filtered out.

5. The treated powder is taken out, and vacuum-dried at 70°C and 0.005 MPa for 5 h, to obtain the dried samarium-iron-nitrogen powder with a passivation layer on the surface.

6. The samarium-iron-nitrogen powder with the passivation layer on the surface is treated at a high temperature of 300°C for 30 min, an oxidation weight gain test is performed, and the measured oxidation weight gain rate is 5.2%, while a control group without surface treatment is 16.1%.

7. 15 g of the powder with the passivation film on the surface obtained in the step 5 and the untreated powder are taken and 3wt% of an epoxy resin is added as a binder respectively, after a standard cylindrical sample is prepared, the magnetic properties are tested, and test results are listed in Table 2.

Embodiment 7:

1. The passivation solution is prepared, the inorganic solvent is water, the organic solvent is acetone, and the mass ratio of the inorganic solvent and the organic solvent is 1:5. The solute includes 0.15 mol/L of $Zn^{2+}$, 0.2 mol/L of $Zr^{2+}$, 0.2 mol/L of $PO_4^{3-}$, 0.1 mol/L of $K^+$, and 0.2 mol/L of $Cl^-$, and pH is adjusted to 3 with a phosphoric acid. The additive is a phosphate, and the addition amount of the phosphate is 0.3% of the mass of the metal powder to be treated.

2. 200 kg of iron-silicon-aluminum powder with an average particle size of 30 $\mu$m is taken, and added to a container that may achieve solid-liquid separation by a filter screen and filter cloth.

3. The passivation solution is pumped into the container with the powder through a pipe from a feeding port by a water pump or an air pump, the flow rate is 200 L/min, and it is treated for 50 min, and then the passivation solution is stopped to be injected into the feeding port.

4. The feeding port is closed, 0.11 MPa of a nitrogen gas is fed from an air inlet, the gas feeding time is 20 min, and most of the passivation solution in the container is filtered out.

5. The treated powder is taken out, and vacuum-dried at 90°C and 0.005 MPa for 5 h, to obtain the dried iron-silicon-aluminum powder with a passivation layer on the surface.

6. The iron-silicon-aluminum powder with the passivation layer on the surface is treated at a high temperature of 300°C for 30 min, an oxidation weight gain test is performed, and the measured oxidation weight gain rate is 1.5%, while a control group without surface treatment is 2.6%.

7. The iron-silicon-aluminum powder treated in the step 5 is taken, prepared into a standard magnetic ring, tested at 50 kHz and 100 mT, the magnetic permeability is 135, and the loss is 165 mW/cm$^3$; and a control group without surface treatment has the magnetic permeability of 140, and the loss is 180 mW/cm$^3$.

Embodiment 8:

1. The passivation solution is prepared, the inorganic solvent is water which is 20% of the total mass of the solvent, and the organic solvent is anhydrous ethanol which is 80% of the total mass of the solvent. The solute includes 0.05 mol/L of $Zn^{2+}$, 0.1 mol/L of $Zr^{2+}$, 0.2 mol/L of $PO_4^{3-}$, 0.05 mol/L of $K^+$, 0.1 mol/L of $Cl^-$, and 0.083 mol/L of $PO_4^{3-}$, and pH is adjusted to 4 with a phosphoric acid.

2. 100 kg of lanthanum-iron-silicon powder with an average particle size of 50 $\mu$m is taken, and added to a container that may achieve solid-liquid separation by a filter screen and filter cloth.

3. The passivation solution is pumped into the container with the powder through a pipe from a feeding port by a water pump or an air pump, the flow rate is 200 L/min, and it is treated for 20 min, and then the passivation solution is stopped to be injected into the feeding port.

4. The feeding port is closed, 0.11 MPa of a nitrogen gas is fed from an air inlet, the gas feeding time is 30 min, and most of the passivation solution in the container is filtered out.

5. The treated powder is taken out, and vacuum-dried at 90°C for 5 h, to obtain the dried lanthanum-iron-silicon powder with a passivation layer on the surface.

6. The lanthanum-iron-silicon powder with the passivation layer on the surface is treated at a high temperature of 300°C for 30 min, an oxidation weight gain test is performed, and the measured oxidation weight gain rate is 3.3%, while a control group without surface treatment is 5.1%.

7. The powder treated in the step 5 is taken, and it is tested that the isothermal magnetic entropy change under 0~1 T magnetic field is about 10.6 J/kgK, while the isothermal magnetic entropy change of the magnetic powder without the surface treatment under 0~1 T magnetic field is about 11.3 J/kgK, there is no significant decrease.

The value of the isothermal magnetic entropy change is larger, it is indicated that the thermal effect thereof is greater, namely the performance of the material is higher. Compared with the untreated original metal powder, the isothermal magnetic entropy change of the above surface passivated metal powder is only decreased by 0.7 J/kgK, it is indicated that the magnetic performance of the surface passivated metal powder is not decreased significantly, and the passivation layer prepared by the above passivation method has a little effect on the magnetic performance of the metal powder.

Embodiment 9:

1. The passivation solution is prepared, the solute includes 0.01 mol/L of $Zn^{2+}$, 0.01 mol/L of $Zr^{2+}$, 0.01 mol/L of $K^+$, 0.01 mol/L of $Cl^-$, and the balance of $PO_4^{3-}$, the inorganic solvent is water which is 10 % of the total mass of the solvent, the organic solvent is anhydrous ethanol which is 30% of the total mass of the solvent and 60% of acetone, $CH_3COOH$ is added to adjust a pH value to 4, and a silane coupling agent which is 0.8% of the total mass of the powder is added.

2. 20 kg of samarium-iron-nitrogen powder with an average particle size of 0.1 μm is taken, and added to a container.

3. The passivation solution is pumped into the container with the powder through a pipe from a feeding port by a water pump, the flow rate is 300 L/min, and it is treated for 1 min, and then the passivation solution is stopped to be injected into the feeding port.

4. The feeding port is closed, 0.3 MPa of a nitrogen gas is fed from an air inlet, the gas feeding time is 3 min, and most of the passivation solution in the container is filtered out.

5. The treated powder is taken out, and vacuum-dried at 60°C and 0.005 MPa of the vacuum degree for 5 h, to obtain the dried samarium-iron-nitrogen powder with a passivation layer on the surface.

6. The samarium-iron-nitrogen powder with the passivation layer on the surface is treated at a high temperature of 300°C for 30 min, an oxidation weight gain test is performed, and the measured oxidation weight gain rate is 5.8%, while a control group without surface treatment is 18.2%.

7. 15 g of the powder with the passivation film on the surface obtained in the step 5 and the untreated powder are taken and 3wt% of an epoxy resin is added as a binder respectively, after a standard cylindrical sample is prepared, the magnetic properties are tested, and test results are listed in Table 2.

Embodiment 10:

This embodiment is the same as Embodiment 1 except that the average particle size of the powder is 100 μm. The neodymium-iron-boron powder with the passivation layer on the surface is treated at a high temperature of 300°C for 30 min, an oxidation weight gain test is performed, and the measured oxidation weight gain rate is 1.9%, while a control group without surface treatment is 2.3%.
15 g of the powder with the passivation film on the surface obtained in the step 5 and the untreated powder are taken and 3wt% of an epoxy resin is added as a binder respectively, after a standard cylindrical sample is prepared, the magnetic properties are tested, and test results are listed in Table 2.

Embodiment 11:

The surface passivated neodymium-iron-boron powder is prepared by the method of Embodiment 1, the prepared powder is taken out of the container, randomly sampled in different positions, and treated at a high temperature of 300°C for 30 min, and an oxidation weight gain test is performed. Test results are listed in Table 1.

Table 1

| Experimental group | Sampling number | Oxidation weight gain rate (%) |
|---|---|---|
| 1 | ① | 2.0 |
| | ② | 2.2 |
| | ③ | 2.1 |
| 2 | ① | 2.2 |
| | ② | 2.1 |
| | ③ | 2.2 |
| 3 | ① | 2.0 |
| | ② | 2.1 |
| | ③ | 2.1 |

Contrast example 1:

Compared with Embodiment 1, the same passivation solution is prepared, and a certain amount of the same neodymium-iron-boron magnetic powder as in Embodiment 1 is soaked in treatment solution by a soaking method for 30 min, and then the magnetic powder is taken out by a magnetic suction method. The others are the same as in Embodiment 1, it is vacuum-dried at 90°C for 5 h, to obtain the dried neodymium-iron-boron powder with a passivation layer on the surface. The neodymium-iron-boron powder with the passivation layer on the surface is treated at a high temperature of 300°C for 30 min, and an oxidation weight gain test is performed. The measured oxidation weight gain rate is 2.0%, while a control group without surface treatment is 3.5%.
15 g of the surface passivated metal powder obtained in the step 5 and the untreated metal powder are taken and 3% of a binder is added respectively, after a standard cylindrical sample is prepared, the magnetic properties are tested, and test results are listed in Table 2.

Contrast example 2:

Compared with Embodiment 5, the same passivation solution is prepared, and a certain amount of the same samarium-iron-nitrogen magnetic powder as in Embodiment 5 is soaked in treatment solution by a soaking method for 8 min, and then the magnetic powder is taken out by a magnetic suction method. The others are the same as in Embodiment 5, it is vacuum-dried at 70°C for 5 h, to obtain the dried samarium-iron-nitrogen powder with a passivation layer on the surface. The samarium-iron-nitrogen powder with the passivation layer on the surface is treated at a high temperature of 300°C for 30 min, and an oxidation weight gain test is performed. The measured oxidation weight gain rate is 4.3%, while a control group without surface treatment is 12.9%.
15 g of the surface passivated metal powder obtained in the step 5 and the untreated metal powder are taken and 3% of a binder is added respectively, after a standard cylindrical sample is prepared, the magnetic properties are tested, and test results are listed in Table 2.

Contrast example 3:

Except that the average particle size of the powder is 0.05 μm, this contrast example is the same as Embodiment 9. The samarium-iron-nitrogen powder with a passivation layer on the surface is treated at a high temperature of 300°C for 30 min, and an oxidation weight gain test is performed. The measured weight gain rate is 7.5%, while a control group without surface treatment is 7.8%.

15 g of the powder with the passivation film on the surface obtained in the step 5 and the untreated metal powder are taken and 3% of a binder is added respectively, after a standard cylindrical sample is prepared, the magnetic properties are tested, and test results are listed in Table 2.

The powder used in this contrast example is seriously oxidized before the passivation treatment, and there is no meaning of performing the the passivation treatment.

Contrast example 4:

This example is the same as Embodiment 1 except that the average particle size of the powder is 150 $\mu$m. The neodymium-iron-boron powder with a passivation layer on the surface is treated at a high temperature of 300°C for 30 min, and an oxidation weight gain test is performed. The measured oxidation weight gain rate is 1.6%, while a control group without surface treatment is 1.7%.

15 g of the powder with the passivation film on the surface obtained in the step 5 and the untreated metal powder are taken and 3% of a binder is added respectively, after a standard cylindrical sample is prepared, the magnetic properties are tested, and test results are listed in Table 2.

The average particle size of the powder used in this contrast example is large, the surface is not easy to be oxidized, the passivation treatment may be performed by a traditional method, and there is no need for the treatment by the method of the present invention.

Table 2

| Number | Sample prepared from surface passivated metal powder | | Sample prepared from metal powder | | Remanence drop rate | Coercive force drop rate |
|---|---|---|---|---|---|---|
| | Remanence/Gs | Coercive force/Oe | Remanence/Gs | Coercive force/Oe | | |
| Embodiment 1 | 7250 | 9360 | 7660 | 9850 | 5.35% | 4.97% |
| Embodiment 2 | 7460 | 9570 | 7660 | 9850 | 2.61% | 2.84% |
| Embodiment 3 | 7900 | 6710 | 8570 | 7260 | 7.82% | 7.58% |
| Embodiment 4 | 8150 | 6920 | 8570 | 7260 | 4.90% | 4.68% |
| Embodiment 5 | 7260 | 9180 | 7720 | 9630 | 5.96% | 4.67% |
| Embodiment 6 | 6390 | 11300 | 6500 | 12510 | 1.69% | 9.67% |
| Embodiment 9 | 6280 | 15960 | 6420 | 17530 | 2.18% | 8.96% |
| Embodiment 10 | 7810 | 8750 | 7980 | 8970 | 2.13% | 2.45% |
| Contrast example 1 | 6870 | 8790 | 7660 | 9850 | 10.31% | 10.76% |
| Contrast example 2 | 5120 | 8510 | 7720 | 9630 | 33.68% | 11.63% |
| Contrast example 3 | 6130 | 7090 | 6370 | 7280 | 3.77% | 2.61% |
| Contrast example 4 | 8010 | 8320 | 8160 | 8530 | 1.84% | 2.46% |

From the comparison of Embodiments 1 and 2 with Contrast example 1, and Embodiment 5 with Contrast example 2, it may be seen that the surface treatment time is prolonged, and the oxidation weight gain rate is decreased, it is indicated that the thickness of the surface passivation film is increased, but the magnetic properties are also decreased much. Compared with the untreated sample, the oxidation weight gain rate of the product treated with the method of the present invention is apparently reduced. Compared with Contrast example 1 and Contrast example 2, the used method of the present invention has less performance decrease under the premise of improving the anti-oxidization capacity, and the effect is better than the traditional soaking method.

From the above description, it may be seen that the above embodiments of the present invention achieve the following technical effects: the present invention may effectively control the passivation degree of the metal powder, especially the metal powder with the smaller average particle size, by passivating the metal powder in the container with the solid-liquid separation device, prevent the performance decrease of the metal powder caused by the excessive passivation, and guarantee the magnetic properties of the anti-oxidation magnetic material while it is guaranteed that the anti-oxidation capacity of the subsequently prepared magnetic material is enhanced.

The above are only preferred embodiments of the present invention, and are not intended to limit the present invention. For those skilled in the art, the present invention may have various modifications and changes. Any modifications, equivalent replacements, improvements and the like made within the spirit and principle of the present invention shall be included within the scope of protection of the present invention.

## Claims

1. A surface treatment method of metal powder, wherein the surface treatment method uses passivation solution to treat the metal powder, to form a passivation film on the surface of the metal powder;

   the passivation solution passes through the metal powder by a flowing method; and
   the average particle size of the metal powder is 0.1~100 μm.

2. The surface treatment method according to claim 1, wherein the surface treatment method comprises:

   1) adding the metal powder to a container;
   2) adding the passivation solution to the container, and controlling the passivation solution to flow through the metal powder and then flowing out of the container;
   3) drying the metal powder treated by the passivation solution in the container;
   preferably, between 2) and 3), the surface treatment method comprises adding washing solution to the container, washing the residual passivation solution on the metal powder, and then flowing out of the container;
   preferably, the washing solution comprises ethanol and/or acetone;
   preferably, the single treatment amount of the surface treatment method is 10-200 kg;
   preferably, the passivation solution is added to the container by a water pump or an air pump;
   preferably, the drying method comprises vacuum drying;
   preferably, the temperature of vacuum drying is 1~100°C;
   more preferably, the temperature of vacuum drying is 50~70°C; and
   preferably, the vacuum degree of vacuum drying is 0.0001~0.03 MPa.

3. The surface treatment method according to claim 2, wherein the container is a container with a filter screen or filter cloth, and the passivation solution flows out of the container by the filter screen or the filter cloth;

   preferably, after the passivation solution or the washing solution is added to the container, it further comprises feeding a gas into the container;
   preferably, the gas is a nitrogen gas or an inert gas;
   more preferably, the inert gas is an argon gas;
   preferably, the pressure of the gas fed into the container is 0.1~1 MPa;
   preferably, the gas feeding time of the gas is 0.1~120 min; and
   more preferably, the gas feeding time of the gas is 1~10 min.

4. The surface treatment method according to any one of claims 1 to 3, wherein the flow rate of the passivation solution is 1-1000 L/min;

   preferably, the flow rate of the passivation solution is 100-600 L/min;
   preferably, the treatment time of the passivation solution is 1~3600 s; and
   more preferably, the treatment time of the passivation solution is 10~1800 s.

5. The surface treatment method according to claim 4, wherein the metal powder comprises one or more of Fe, FeSi, FeSiAl, FeNi, FeNiMo, LaFeSi, NdFeB, NdFeN, CeFeB, CeFeN or SmFeN;

preferably, the average particle size of the metal powder is 1~10 $\mu$m, and further preferably 2~8 $\mu$m;
preferably, the metal powder is in a dry, wet or slurry state;
preferably, the thickness of the passivation film is 3~30 nm;
more preferably, while the average particle size of the metal powder is greater than or equal to 0.1 $\mu$m and less than 10 $\mu$m, the thickness of the passivation film is 3-6 nm; or
while the average particle size of the metal powder is greater than or equal to 10 $\mu$m and less than 60 $\mu$m, the thickness of the passivation film is 6~15 nm; or
while the average particle size of the metal powder is greater than or equal to 60 $\mu$m and less than 100 $\mu$m, the thickness of the passivation film is 15-30 nm.

6. The surface treatment method according to claim 5, wherein the passivation solution comprises a solute, an inorganic solvent, an organic solvent and an additive;

preferably, pH of the passivation solution is 3~6;
preferably, the solute comprises one or more of $Zn^{2+}$, $Zr^{2+}$, $Na^+$, $K^+$, $Ca^{2+}$, $NH^{4+}$, $Cl^-$, $PO_4^{3-}$, $NO_3^-$, $SO_4^{2-}$ or $CH_3COOH$;
preferably, the concentration of each solute in the passivation solution is 0.001~10 mol/L; more preferably, the concentration of each solute is 0.01~1 mol /L;
preferably, the inorganic solvent comprises water;
preferably, the organic solvent comprises one or more of methanol, ethanol, propanol, isopropanol, ethylene glycol, acetone, gasoline, toluene or xylene;
more preferably, the organic solvent comprises one or more of ethanol, acetone, isopropanol or ethylene glycol;
preferably, the mass ratio of the inorganic solvent and the organic solvent is 1:0.001~1:1000; more preferably, the mass ratio of the inorganic solvent and the organic solvent is 1:0.1~1:10; and
more preferably, the additive comprises one or more of silane coupling agent, ethyl silicate, epoxy resin, titanate or phosphate.

7. A surface passivated metal powder, wherein the surface treatment method according to any one of claims 1 to 6 is used to passivate the metal powder, to obtain the surface passivated metal powder, and the average particle size of the surface passivated metal powder is 0.1~100 $\mu$m.

8. The surface passivated metal powder according to claim 7, wherein the weight gain rate of the surface passivated metal powder is 0.1%~6%, when the surface passivated metal powder is heated in air at 300°C for 30 min;

the metal powder comprises one or more of Fe, FeSi, FeSiAl, FeNi, FeNiMo, LaFeSi, NdFeB, NdFeN, CeFeB, CeFeN or SmFeN;
preferably, the average particle size of the surface passivated metal powder is 1~10 $\mu$m; preferably, the thickness of the passivation film is 3~30 nm;
more preferably, while the average particle size of the metal powder is greater than or equal to 0.1 $\mu$m and less than 10 $\mu$m, the thickness of the passivation film is 3-6 nm; or
while the average particle size of the metal powder is greater than or equal to 10 $\mu$m and less than 60 $\mu$m, the thickness of the passivation film is 6~15 nm; or
while the average particle size of the metal powder is greater than or equal to 60 $\mu$m and less than 100 $\mu$m, the thickness of the passivation film is 15-30 nm.

9. An anti-oxidation magnetic material, wherein the surface passivated metal powder according to claim 8 is used, to prepare and obtain the anti-oxidation magnetic material.

10. The anti-oxidation magnetic material according to claim 9, wherein the remanence drop rate of the anti-oxidation magnetic material is less than 10% compared with a non-anti-oxidation magnetic material of the same specification prepared from the metal powder; and
preferably, the coercive force drop rate of the anti-oxidation magnetic material is less than 10% compared with the non-anti-oxidation magnetic material of the same specification.

<div align="center">

**INTERNATIONAL SEARCH REPORT**

</div>

| International application No. |
|---|
| **PCT/CN2022/093106** |

**A. CLASSIFICATION OF SUBJECT MATTER**

B22F 1/145(2022.01)i;  C23C 22/02(2006.01)i;  C23C 22/06(2006.01)i

According to International Patent Classification (IPC) or to both national classification and IPC

**B. FIELDS SEARCHED**

Minimum documentation searched (classification system followed by classification symbols)

B22F; C23C

Documentation searched other than minimum documentation to the extent that such documents are included in the fields searched

Electronic data base consulted during the international search (name of data base and, where practicable, search terms used)

CNABS; VEN; CNTXT; USTXT; WOTXT; EPTXT; CNKI: 横店集团东磁股份, 金属, 粉末, 颗粒, 磁, 钝化, 流, 喷淋, 冲, 干燥, 洗涤, 滤, metal+, powder, particle, magnet+, passivat+, fluid, liquid, dry, wash+, clean+, filter

**C. DOCUMENTS CONSIDERED TO BE RELEVANT**

| Category* | Citation of document, with indication, where appropriate, of the relevant passages | Relevant to claim No. |
|---|---|---|
| Y | CN 109749615 A (BOEING CO.) 14 May 2019 (2019-05-14)<br>description, paragraphs [0002]-[0150], and figures 1 and 2 | 1-10 |
| Y | CN 106521533 A (GRIPM ADVANCED MATERIALS (BEIJING) CO., LTD.) 22 March 2017 (2017-03-22)<br>description, paragraphs [0002]-[0030], and figures 1-4 | 1-10 |
| Y | CN 108220946 A (ZHEJIANG UNIVERSITY OF TECHNOLOGY) 29 June 2018 (2018-06-29)<br>description, paragraphs [0002]-[0014] | 1-10 |
| A | CN 101709347 A (ANSHAN HEFENG REFRACTORY MATERIAL CO., LTD.) 19 May 2010 (2010-05-19)<br>entire document | 1-10 |
| A | KR 20150025709 A (WISCOHITEC CO., LTD.) 11 March 2015 (2015-03-11)<br>entire document | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 June 2022** | **01 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

Information on patent family members

International application No.

**PCT/CN2022/093106**

| Patent document cited in search report | | | Publication date (day/month/year) | Patent family member(s) | | | Publication date (day/month/year) |
|---|---|---|---|---|---|---|---|
| CN | 109749615 | A | 14 May 2019 | US | 2019136067 | A1 | 09 May 2019 |
| | | | | JP | 2019116683 | A | 18 July 2019 |
| | | | | CA | 3014828 | A1 | 03 May 2019 |
| | | | | EP | 3480340 | A1 | 08 May 2019 |
| | | | | RU | 2018130565 | A | 25 February 2020 |
| | | | | US | 10774218 | B2 | 15 September 2020 |
| CN | 106521533 | A | 22 March 2017 | CN | 106521533 | B | 01 January 2019 |
| CN | 108220946 | A | 29 June 2018 | None | | | |
| CN | 101709347 | A | 19 May 2010 | CN | 101709347 | B | 12 October 2011 |
| KR | 20150025709 | A | 11 March 2015 | KR | 101518768 | B1 | 11 May 2015 |

Form PCT/ISA/210 (patent family annex) (January 2015)

**EP 4 205 883 A1**

**Patent documents cited in the description**

- CN 202111329401